## Europäisches Patentamt

## European Patent Office

## Office européen des brevets

(11) Veröffentlichungsnummer: **0 046 494**
**B1**

(12) **EUROPÄISCHE PATENTSCHRIFT**

(45) Veröffentlichungstag der Patentschrift:
**05.12.84**

(51) Int. Cl.³: **C 08 J 9/22**, C 08 L 25/04

(21) Anmeldenummer: **81105331.3**

(22) Anmeldetag: **09.07.81**

(54) Teilchenförmige, treibmittelhaltige Styrolpolymerisate und deren Verwendung.

(30) Priorität: **08.08.80 DE 3030053**

(43) Veröffentlichungstag der Anmeldung:
**03.03.82 Patentblatt 82/9**

(45) Bekanntmachung des Hinweises auf die Patenterteilung:
**05.12.84 Patentblatt 84/49**

(84) Benannte Vertragsstaaten:
**BE DE FR GB IT NL**

(56) Entgegenhaltungen:
**BE - A - 755 075**
**DE - A - 2 133 253**
**DE - A - 2 256 842**
**DE - A - 2 612 101**
**DE - B - 1 248 935**
**FR - A - 2 379 565**

**CHEMICAL ABSTRACTS, Band 89, Nr. 16, 16. Oktober 1978, Seite 43, Nr. 130509w Columbus, Ohio, U.S.A.**

(73) Patentinhaber: **BASF Aktiengesellschaft,
Carl-Bosch-Strasse 38, D-6700 Ludwigshafen (DE)**

(72) Erfinder: **Hahn, Klaus, Dr., Burggasse 2,
D-6840 Lampertheim (DE)**
Erfinder: **Rath, Hans Peter, Dr., Friedhofstrasse 7,
D-6718 Gruenstadt (DE)**
Erfinder: **Krapf, Heinz, Dr., In der Schleit,
D-6718 Gruenstadt (DE)**
Erfinder: **De Grave, Isidoor, Dr., Mandelring 3,
D-6706 Wachenheim (DE)**
Erfinder: **Walter, Manfred, Dr., Hans-Purrmann-Allee 18,
D-6720 Speyer (DE)**

## Beschreibung

Die Erfindung betrifft teilchenförmige, treibmittelhaltige Styrolpolymerisate, die bei der Verarbeitung zu Schaumstoff-Formkörpern kurze Entformzeiten ergeben, wobei die einzelnen Schaumstoffpartikel gut miteinander verschweisst sind.

Die Herstellung von Formkörpern aus schaumförmigen Styrolpolymerisaten ist bekannt. In der Technik hat sich eine Arbeitsweise bewährt, bei der die verschäumbaren treibmittelhaltigen Polymerisatteilchen in einer ersten Arbeitsstufe zunächst so lange auf Temperaturen oberhalb ihres Erweichungspunktes erhitzt werden, bis sie zu einem losen Haufwerk von gewünschtem Schüttgewicht aufgeschäumt sind. Dieser Vorgang wird als «Vorschäumen» bezeichnet. Damit sich expandierbare Styrolpolymerisate gut verarbeiten lassen, dürfen die einzelnen Partikel beim Vorschäumen nicht zu grösseren Agglomeraten zusammensintern, weil sonst die Förderung des vorgeschäumten Gutes sowie das Füllen von Formen behindert wird. Die vorgeschäumten Teilchen werden zunächst mehrere Stunden gelagert und dann in einer perforierten druckfesten Form durch erneutes Erhitzen mit Heissdampf weiter aufgeschäumt, wobei sie zu einem Formkörper verschweissen, der in seinen Dimensionen dem Hohlraum der Form entspricht. Dieser zweite Arbeitsgang wird als Ausschäumen bezeichnet. Nach dem Ausschäumen muss der Formkörper innerhalb der Form abkühlen. Dabei muss so lange gewartet werden, bis auch das Innere des Formkörpers auf Temperaturen unterhalb des Erweichungspunktes des Styrolpolymerisats abgekühlt ist. Wird der Formkörper vorzeitig der Form entnommen, so kann er sich verziehen oder kollabieren. Lange Kühlzeiten erhöhen natürlich die Herstellkosten. Es hat daher nicht an Versuchen gefehlt, die Entformzeit zu verkürzen.

In der DE-OS 2 133 253 wird vorgeschlagen, expandierbare Polystyrolteilchen mit Glyzerinestern von höheren Fettsäuren zu beschichten. Diese bewirken tatsächlich eine erhebliche Verringerung der Entformzeit. Nach der DE-OS 2 256 842 sollen die Teilchen zusätzlich noch mit einem feinverteilten anorganischen Feststoff überzogen werden, wodurch die Neigung zum Agglomerieren herabgesetzt wird. Es hat sich jedoch gezeigt, dass treibmittelhaltige Polystyrolteilchen, die mit Glyzerinestern beschichtet sind, bei der Verarbeitung Schaumstoff-Formkörper ergeben, bei denen die Verschweissung der einzelnen Schaumstoffteilchen nicht optimal ist.

Der Erfindung lag daher die Aufgabe zugrunde, teilchenförmige, treibmittelhaltige Styrolpolymerisate bereitzustellen, die nicht zum Agglomerieren neigen und bei der Verarbeitung zu Schaumstoff-Formkörpern kurze Entformzeiten ergeben, wobei aber die Schaumstoffteilchen gut miteinander verschweissen.

Diese Aufgabe wird erfindungsgemäss dadurch gelöst, dass die Teilchen oberflächlich mit 0,05 bis 1 Gew.% eines Esters aus einer Hydroxycarbonsäure mit 3 bis 6 Kohlenstoffatomen und einem Alkohol mit 10 bis 20 Kohlenstoffatomen beschichtet werden. Die Mindestformverweilzeiten sind im Vergleich mit den bisher üblichen Beschichtungsmitteln auf Basis von Glyzerinestern um 20 bis 50% verkürzt, und es werden wesentlich höhere Verschweissungswerte gefunden. Die Schaumstoff-Formkörper weisen eine gleichmässige Rohdichteverteilung und eine gute Dimensionsstabilität auf.

Im Chemical Abstracts 89, Referat 130509 w ist die Beschichtung von EPS-Granulat mit 12-Hydroxystearinsäuretriglyzerid beschrieben, wodurch eine verbesserte Verschweissung der Schaumstoffteilchen bewirkt werden soll. Aus dem Referat geht nicht hervor, dass Hydroxycarbonsäureester als Beschichtungsmittel für EPS-Granulat eine Verkürzung der Entformzeit bewirken. Dies kann auch aus·BE-A 755 075 nicht entnommen werden, wo alkoxylierte Alkohole als Beschichtungsmittel beschrieben sind.

Styrolpolymerisate im Sinn der Erfindung sind Polystyrol und Mischpolymerisate des Styrols mit anderen $\alpha,\beta$-olefinisch ungesättigten Verbindungen, die mindestens 50 Gewichtsteile Styrol einpolymerisiert enthalten. Als Mischpolymerisationskomponenten kommen z.B. in Frage $\alpha$-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat.

Die teilchenförmigen Styrolpolymerisate werden nach den üblichen Verfahren hergestellt. Sie können in Perlform, in Form zylindrischer Granulate oder in Form von Brocken vorliegen, wie sie beim Mahlen von Substanzpolymerisaten erhalten werden. Die Teilchen haben vorteilhaft Durchmesser von 0,1 bis 6 mm, insbesondere von 0,4 bis 3 mm.

Die Styrolpolymerisate enthalten in homogener Verteilung ein oder mehrere Treibmittel. Als Treibmittel eignen sich z.B. unter Normalbedingungen gasförmige oder flüssige Kohlenwasserstoffe oder Halogenkohlenwasserstoffe, die das Styrolpolymerisat nicht lösen und deren Siedepunkt unter dem Erweichungspunkt des Polymerisats liegt. Geeignete Treibmittel sind z.B. Propan, Butan, Pentan, Cyclopentan, Hexan, Cyclohexan, Dichlordifluormethan und Trifluorchlormethan. Die Treibmittel sind in den Styrolpolymerisaten im allgemeinen in Mengen zwischen 3 und 15 Gewichtsprozent, bezogen auf das Polymerisat, enthalten.

Die teilchenförmigen Styrolpolymerisate sind erfindungsgemäss mit 0,05 bis 1, vorzugsweise 0,1 bis 0,5 Gew.% eines Esters aus einer Hydroxycarbonsäure mit 3 bis 6 Kohlenstoffatomen, die vorzugsweise 1 bis 4 Carboxylgruppen und vorzugsweise 1 bis 3 Hydroxylgruppen trägt, und einem Alkohol mit 10 bis 20 Kohlenstoffatomen beschichtet. Besonders geeignete Hydroxycarbonsäuren sind Zitronensäure und Weinsäure, daneben auch Milchsäure, und Apfelsäure.

Die erfindungsgemäss eingesetzten Ester werden nach üblichen Methoden, z.B. durch Umsetzung der Carbonsäuren mit den Alkoholen hergestellt.

Neben den genannten Estern können die Styrolpolymerisatteilchen noch herkömmliche Mittel zur Verkürzung der Entformzeit, beispielsweise Glyzerinester, wie Glyzerinmonostearat oder Glyzerinether, wie Glyzerindistearylether, als Beschichtung enthalten. Besonders günstig sind Mischungen von Hydroxycarbonsäureestern mit Glyzerinestern im Gewichtsverhältnis 5:1 bis 1:5.

Die Ester befinden sich, zumindest zum überwiegenden Teil als Überzug auf der Oberfläche der expandierbaren Polystyrolpartikel, in einer möglichst gleichmässigen Verteilung. Die Art der Auftragung ist nicht kritisch, sie kann z.B. durch einfaches Auftrommeln des feinteiligen Esters auf die Styrolpolymerisatteilchen in handelsüblichen Mischern erfolgen. Es ist jedoch auch möglich, den Ester aus einer wässrigen Dispersion oder einer Lösung in einem organischen Lösungsmittel aufzutragen, wobei das Lösungsmittel bzw. das Wasser beim Auftragen entfernt werden muss. Ferner können die Ester auch am Ende oder gegen Ende der Suspensionspolymerisation zu dem Ansatz der Styrolperlpolymerisation hinzugefügt werden.

Die Styrolpolymerisate können auch Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, wie Trisdibrompropylphosphat, Hexabromcyclododecan, Chlorparaffin sowie Synergisten für Flammschutzmittel, wie Dicumyl und hochzersetzliche organische Peroxide; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure. Die Zusatzstoffe können je nach der beabsichtigten Wirkung in den Teilchen homogen verteilt oder als Oberflächenbeschichtung vorliegen.

Die erfindungsgemässen teilchenförmigen treibmittelhaltigen Styrolpolymerisate können nach üblichem Verfahren zu Schaumstoff-Formkörpern mit einem Raumgewicht von 5 bis 100 g/l verschäumt werden. Die Mindestformverweilzeiten (MFZ) werden nach folgender Methode bestimmt: Die vorgeschäumten Styrolpolymerisatpartikel werden durch Bedampfen mit Wasserdampf in einer Form zu einem Formkörper verschweisst, in deren Mittelpunkt eine Drucksonde angeordnet ist. Es wird die Zeit vom Beginn des Kühlens bis zu dem Zeitpunkt ermittelt, an dem der Druck im Inneren des Formkörpers auf 1,05 bar abgesunken ist. Erfahrungsgemäss hat sich gezeigt, dass bei diesem Druck die Formkörper gefahrlos entformt werden können.

Zur Beurteilung der Verschweissung werden 5 cm dicke, einen Tag gelagerte Schaumstoffproben über eine Kante gebrochen. Das Verhältnis von dabei durchgerissenen Teilchen zu denen, die insgesamt in der Bruchfläche sichtbar sind, wird abgeschätzt und in Prozent angegeben. Bruchbild 0% bedeutet, dass die Haftfestigkeit der Teilchen aneinander geringer ist, als die Festigkeit der Teilchen selbst. 100% bedeutet, dass nur durchgerissene Teilchen sichtbar sind.

Beispiele

Expandierbares Polystyrol mit einem Gehalt von 6,4 Gew.% n-Pentan und einem mittleren Teilchendurchmesser von 1,5 mm wurde durch Auftrommeln im Schaufelmischer mit den verschiedenen Substanzen beschichtet, wobei jeweils noch 0,02% Zinkstearat zugesetzt wurde. Durch Einwirkung von strömendem Wasserdampf wurden die Polystyrolteilchen in einem kontinuierlichen Rührvorschäumer auf ein Schüttgewicht von 15 g/l vorgeschäumt, 24 Stunden zwischengelagert und anschiessend in einer Blockform durch Bedampfung mit einem Druck von 1,8 bar während 20 Sekunden zu einem Block verschweisst. Die gemessenen Mindestformverweilzeiten sowie Verschweissungswerte sind in der Tabelle zusammengestellt.

Tabelle 1:
Vergleich der EPS-Beschichtungsmittel Glycerinmonostearat und Hydroxycarbonsäurealkylester

| Carbonsäureester | Gew.-% | | | | | | |
|---|---|---|---|---|---|---|---|
| Glycerin-monostearat | 0,4 | – | 0,2 | – | 0,2 | – | 0,2 |
| Citronensäure-tricetylester | – | 0,4 | 0,2 | – | – | – | – |
| Citronensäure-tristearylester | – | – | – | 0,4 | – | – | – |
| Milchsäure-tristearylester | – | – | – | – | 0,2 | – | – |
| Weinsäure-dilaurylester | – | – | – | – | – | 0,4 | 0,2 |
| Mindestform-verweilzeit [min] | 38 | 90 | 21 | 28 | 27 | 30 | 31 |
| Bruch-verschweissung [%] | 40 | 90 | 75 | 87 | 70 | 65 | 61 |

## Patentansprüche

1. Teilchenförmige, treibmittelhaltige Styrolpolymerisate, dadurch gekennzeichnet, dass sie oberflächlich mit 0,05 bis 1 Gew.% eines Esters aus einer Hydroxycarbonsäure mit 3 bis 6 Kohlenstoffatomen und einem Alkohol mit 10 bis 20 Kohlenstoffatomen beschichtet sind.

2. Teilchenförmige, treibmittelhaltige Styrolpolymerisate nach Anspruch 1, dadurch gekennzeichnet, dass sie mit einer Mischung aus dem Hydroxycarbonsäureester und einem Glyzerinester im Gewichtsverhältnis 5:1 bis 1:5 beschichtet sind.

3. Verwendung der teilchenförmigen, treibmittelhaltigen Styrolpolymerisate nach Anspruch 1 zur Herstellung von Schaumstoff-Formkörpern mit einem Raumgewicht von 5 bis 100 g/l.

## Claims

1. A particulate styrene polymer, containing blowing agent, which is surface-coated with from 0.05 to 1% by weight of an ester of a hydroxycarboxylic acid of 3 to 6 carbon atoms with an alcohol of 10 to 20 carbon atoms.

2. A particulate styrene polymer, containing blowing agent, as claimed in claim 1, which is coated with a mixture of the hydroxycarboxylic acid ester and a glycerol ester in a weight ratio of from 5:1 to 1:5.

3. The use of a particulate styrene polymer, containing blowing agent, as claimed in claim 1 for the production of foam moldings having a density of from 5 to 100 g/l.

## Revendications

1. Polymères du styrène sous forme de particules, contenant un agent porogène, caractérisés en ce qu'ils sont revêtus en surface de 0,05 à 1% en poids d'un ester d'un acide hydroxycarboxylique possédant de trois à six atomes de carbone et d'un alcool possédant de dix à vingt atomes de carbone.

2. Polymères du styrène sous forme de particules, contenant un agent porogène, suivant la revendication 1, caractérisés en qu'ils sont recouverts d'un mélange de l'ester d'acide hydroxycarboxylique et d'un ester de la glycérine en un rapport pondéral de 5:1 à 1:5.

3. Utilisation des polymères du styrène sous forme de particules, contenant un agent porogène, suivant la revendication 1, pour la préparation de corps expansés moulés possédant un poids volumique de 5 à 100 g/l.